# EUROPEAN PATENT APPLICATION

(11) **EP 2 265 067 A1**
(43) Date of publication of application: **22.12.2010**
(21) Application number: 10166427.4
(22) Date of filing: 17.06.2010
(51) Int. Cl.: H04W 60/04, H04W 4/06, H04W 4/14, H04W 88/18

(54) **Wireless device and method of monitoring a short message service SMS cell broadcast channel**

(30) Priority: 17.06.2009 GB 0910494
(71) Applicant: Shurvinton, William, Thatcham Berkshire RG19 3HP (GB)
(72) Inventor: Shurvington, William, Thatcham Berkshire, RG19 3HP (GB)
(74) Representative: Dunlop, Hugh Christopher

(57) **Abstract**

Modification of the handling of the Radio Resource (RR) layer in a mobile device allows it to act as a paging device without using any resources in the MSC/VLR or SGSN. The device can still receive instructions via SMS Cell Broadcast and attach to the network whenever commanded by one of these messages, turning any GSM network into a paging network. This allows the creation of new classes of low cost Machine to Machine (M2M) services that can be scaled to tens of millions of devices on a network without significantly adding to network load.

## Description

### Field of the Invention

This invention relates to a wireless device such as a GSM, IS95 or WCDMA terminal and a method of operation thereof. It also relates to various items of controlled equipment, such as street lamps, meters and television set-top-boxes, controlled by a wireless device.

### Background

Machine to machine (M2M) services using radio links for 2-way communications have been known for many years. However there are a number of applications where the cost and particularly the operating expense has been too high to make the systems viable. If one looks in particular at using GSM networks for M2M services, as the operating expense is driven down, one of the costs that starts to become significant is that of network capacity.

Patent application EP1235365A1 describes a combined a pager receiver and GSM cellular radio telephone, and discusses controlling the combined apparatus according to a message received in accordance with normal GSM operation. It is described how system capacity drops when location registration is performed by each terminal in the standby mode. When in standby on the pager system, the combined device described does not transmit.

US Patent No. 5541976 also describes a combined pager receiver and mobile telephone. In sleep mode, the mobile telephone is deactivated except for the FM receiver, and the pager is activated. Just before the mobile telephone is deactivated, it sends a deactivation message to the mobile switching centre. The mobile switching centre registers this and establishes a call forwarding procedure for calls placed to the mobile telephone.

Patent application EP0821537A2 describes a combined cellular and paging service through a mobile station in a cellular system. The mobile station remains registered in the system while in pager mode and may roam without disturbing the paging function. As such, it is registered in the VLR of the system in which it is roaming and is therefore attached in that system.

If a device is attached to a network then it is using VLR capacity in the case of a circuit switched (CS) attach and SGSN capacity for a packet switched (PS) attach. Additionally for a PS attach if a PDP context is active then GGSN capacity is utilised. The cost per subscriber can be a significant portion of the overall network costs. For example, smart metering projections show most major European countries having 20-40 million smart meters within the next decade. If all of these used a GSM connection for uplink and the connections are shared between the two largest operators in that country, then potentially there would need to be a doubling of the core network nodes (MSC/VLR and SGSN) in each of those networks.

### Glossary of Acronyms

The following is a glossary of well-known acronyms not coined elsewhere in this specification.
- BSC: Base Station Controller
- BTS: Base Transceiver Station
- GGSN: Gateway GPRS Support Node
- GPRS: GSM Packet Radio System
- GSM: Global System for Mobile radio (or Groupe Speciale Mobile)
- HLR: Home Location Register
- ICCID: Integrated Circuit Card Identity
- IMSI: International Mobile Subscriber Identity
- MS: Mobile Station (i.e. wireless device, even if not mobile)
- MSC: Mobile Switching Centre
- PDP: Packet Data Protocol
- SGSN: Serving GPRS Support Node
- VLR: Visitor Location Register
- WCDMA: Wireless Code Division Multiplex

### Summary of the Invention

In accordance with one aspect of the invention, a wireless device is provided having means for monitoring a short message service cell broadcast channel on a network whilst not being active in either a circuit switched attach or packet switched attach mode.

In accordance with another aspect of the invention, an item of equipment is provides, such as a streetlamp, having a wireless device and a controller for controlling the lamp in accordance with messages received on a short message service cell broadcast channel while the wireless device is not active in either a circuit switched attach or packet switched attach mode.

In accordance with another aspect of the invention, a meter is provided comprising a display for displaying metered units (e.g. units of time in the case of a parking meter or units of gas, electricity or water in the case of a gas, electricity or water meter), and a wireless device for receiving messages on a short message service cell broadcast channel while the wireless device is not active in either a circuit switched attach or packet switched attach mode. A processor causes the display to display metered units dependent on the messages received.

In accordance with another aspect of the invention, a television set-top box is provided comprising: a receiver for receiving television signals for display on a television, a wireless device for receiving messages on a short message service cell broadcast channel while the wireless device is not active in either a circuit switched attach or packet switched attach mode, and a processor for controlling the display of signals on the television dependent on the messages received. The processor may additionally or alternatively deliver to the television, for display on the television, other information dependent on the messages received.

A method of operation of a wireless device is also provided, comprising monitoring a short message service cell broadcast channel on a network whilst not being active in either a circuit switched attach or packet switched attach mode.

The method preferably comprises sending or receiving a detach message, wherein the step of monitoring is performed without reattaching in the network, and may comprise receiving and decoding instructions given in the SMS-Cell broadcast message after having detached from the network. It may further comprise attaching to the network on receipt of a specific SMS-Cell Broadcast message. The method preferably also comprises sending a message to initiate attachment to the network on receipt by the device of an external stimulus.

A flush may be performed from a MSC/VLR or SGSN of a subscriber identifier for the wireless device. The flush is preferably (though not necessarily) performed automatically when a detach message is received from the wireless device or on completion of a transaction.

Thus, a GSM, IS-95, WCDMA or other wireless network device is provided which has the ability to monitor the SMS-Cell broadcast channel on a network whilst not being active in either the MSC/VLR (circuit switched attach) or SGSN (packet switched attach). The device is preferably able to interpret instructions given in the SMS-Cell broadcast message. In one embodiment, messages for several devices are contained in one SMS-Cell broadcast message.

The device of the present invention is preferably capable of attaching to the network on receipt of a specific SMS-Cell Broadcast message (preferably specified by its ICCID which is tied to the device at time of manufacture, but can be specified by any unique code known to both the device and the CBE) or on receipt of an external stimulus.

Means may be provided for scheduling SMS-CB messages in the network.

For the purposes of this invention, two services will be discussed by way of examples of equipment in general that may be controlled wirelessly:
1. Smart lighting. Public street lighting can be upgraded from its current system of either group control, or individual switching based on lighting levels to a multi-level system where lights can be individually, dimmed or switched and grouped as required. There is also a requirement for feedback from the lights for parameters such as energy metering and fault reporting. The current solutions being proposed are less functional and more expensive than the invention described here.
2. Smart Metering. GSM can be used to allow wide area roll out of smart meters in Europe. However the potential volumes are such that using standard "always-on" connections would place a huge load on the networks.

Looking at the key use cases for both of these services it can be seen that, for the majority of the time the device does not need to be connected to the network (and therefore use resources on the network), but needs to be in a position where it can be paged, either with instructions or with a request to attach to the network. Previously the only way to allow a GSM device to work this way was to have a separate paging device connected which would activate the GSM device. This invention will demonstrate a way in which the GSM device can be made to act like a paging device. This will allow the device to receive messages whilst detached from the network and therefore not using resources on that network

The Radio Resource and Mobility Management layers in GSM are designed to deal with a device that is attached to the network and expected to move between radio cells. As mobility is not required for the described solutions the need of the device to perform a periodic location update is removed. The device is it can operate in a paging mode, where communications are one way, unless required to attach to the network for two way data transfer.

Using paging mode removes the need for the device to be permanently using network resource, so reducing costs and thereby allowing new classes of services to be offered. Using lighting control as an example there are 3 main operation modes to be covered
1. Initial installation (called pairing)
2. Control (one way)
3. Feedback (two way)

In 1. The device, when powered up in a network for the first time. At this point it is paired with the system that it is controlling and monitoring. The procedure for pairing has been designed to be highly efficient to allow very rapid deployment of the solution.

In 2. The device is detached from the GSM network, but monitoring the SMS-CB channel. messages can be sent to the unit to command a change of state or request an attachment to the network.

In 3. The device attaches to the GSM network (either Circuit-switched or packet-switched attach). In this mode of operation the device behaves exactly as any other GSM modem. data can be uploaded from or downloaded to the device. At the end of the session the device will detach from the network and go back into mode 2.

A detailed description of a cellular radio system and a wireless device will now be given by way of example only, with reference to the drawings.

### Brief Description of the Drawings

Fig. 1 shows a GSM cellular radio system incorporating a wireless device in accordance with a preferred embodiment of the invention;
Fig. 2 is a process flow diagram illustrating the operation of the device of Fig. 1;
Fig. 3 shows a simplified attach/detach sequence for circuit switched operation;
Fig. 4 shows a simplified attach/detach sequence for packet switched operation; and
Fig. 5 illustrates a wireless device in combination with various elements of equipment.

### Detailed Description

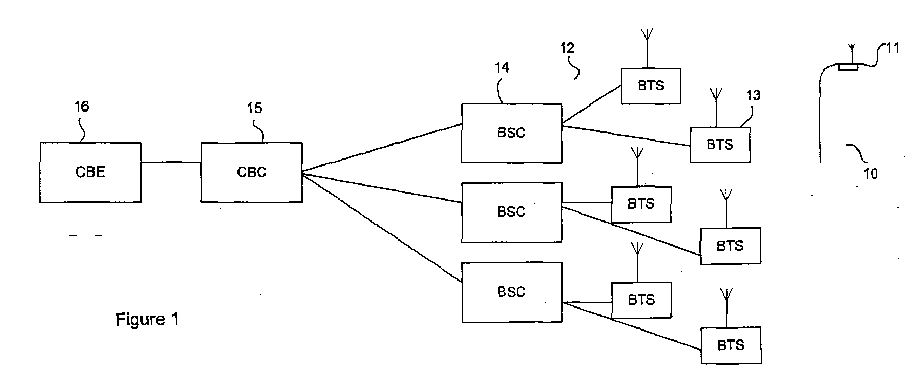

Fig. 1 shows a simplified architecture for the system. It shows (by way of example) a streetlamp 10 having a wireless device 11 in accordance with the invention, which will be described in greater detail. The figure shows a radio network 12 comprising a number of BTSs 13, connected to a set of BSCs 14 (many BTSs to one BSC). The BSCs are connected to a cell broadcast controller (CBC) 15, which is connected to a cell broadcast entity (CBE) 16.

The cell broadcast entity (CBE) 16 is the front end application which defines messages to be sent to the streetlamp 10 (or other device under control), the geographical location of the messages and the timing of the messages. There can be a plurality of CBEs in a network, all connected to the CBC 15, each handling a different service.

The messages are passed to the cell broadcast controller 15. This contains the network topology and location of cell sites, so maps the geographic location to the radio cells. It formats the messages in a format the BSC 14 can understand and schedules the messages based on requirements from other CBEs. In a network there is usually only one CBC 15 which handles the cell broadcast messages for all cells in the network.

The CBE/CBC combination in this service is novel in that it has knowledge of the cell location of devices operating in paging mode. This is not vital, but improves the efficiency of the network by minimising the number of cells that need to carry a paging message.

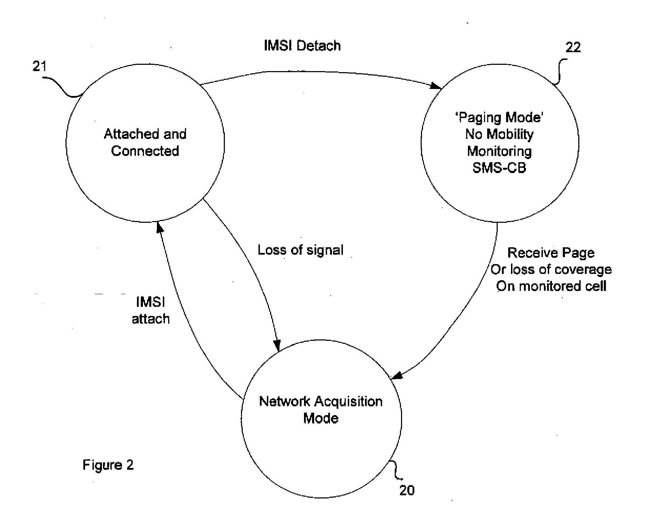

Fig. 2 shows operational modes of the device 11. There are three modes shown:
- Acquisition mode 20, in which the device initiates an IMSI attach as per 3GPP specifications
- Connected mode 21, in which the device behaves exactly like any other GSM device.
- Paging mode 22, in which the device is not registered as attached in the HLR, VLR or SGSN, but is still monitoring the cell to which it was last connected.

Operation will be discussed from a starting point of the device 11 being started up in mode 20. Form this mode, the device performs normal network search and acquisition and sends or receives an IMSI attach message and enters mode 21, in which it is attanched in the HLR, VLR or SGSN.

Once attached, the device can perform any initiation processes (that may require 2-way communication with a maintenance mode) and it can then perform an IMSI detach operation. This may be initiated simply by a time-out (e.g. 30 seconds after power-up) or after a timeout subject to no other events (e.g. 60 seconds after power-up subject to not receiving a task message from the CBE).

The device 11 will always attach in mode 21 before going into paging mode 22. It needs to connect once before it can get into paging mode 22. Once in paging mode 22 it can stay that way for days or weeks without a connection. If coverage were to be lost, or if the network frequencies are changed, then the device will immediately proceed from mode 22 to acquisition mode 20 and reattach (mode 21). This ensures that in case of any fault condition it will revert into a safe mode of operation (attached to the network).

Figure 2 as drawn is a pure state diagram for the radio, so from paging mode the only place it can go is to aquisition mode 20. Whilst in paging mode it can perform various actions described below. The device cannot get from paging to attached without reaquiring the network.

In a GSM device the Radio Resource layer controls network attach and detach behaviour of the device. In normal operation, when a device detaches from the network (normally when powering off) it stops monitoring any of the radio paging channels, other than requires to instigate a new attachment.

Patent application US20030003895 describes basic aspects of a conventional detach procedure. The user equipment unit (UE) sends an IMSI DETACH INDICATION message on the signalling connection to the core network. The core network marks the user equipment unit as in MM-detached state. (In such a prior art system, if any terminating calls are received at this point, the core network does not need to page the user equipment unit since the core network assumes that the user equipment unit is not reachable, and it simply replies with a signal or voice message alerting the calling party that the called party is not reachable for the moment).

Patent application US20030081607 describes a GPRS Tunnelling Protocol in which a tunnel is torn down by initiating a Detach Request that is sent to the SGSN which, in turn, sends a Delete PDP Context Request message to a GGSN. The GGSN deletes the PDP Context for this MS and responds with a Delete PDP Context Response message to the SGSN. The SGSN sends an IMSI Detach Indication and GPRS Detach Indication to the GGSN. The SGSN then deletes the PDP Context, and sends a Detach Accept message to the MS. As a result, the GTP tunnel is deleted.

These mechanisms can be used with the present invention, with the modification that the device of the present invention is able to monitor a short message service cell broadcast channel on the network whilst not being active in either a circuit switched attach or packet switched attach mode.

This invention introduces a new operating mode to the device in a modification to the Radio Resource Layer.

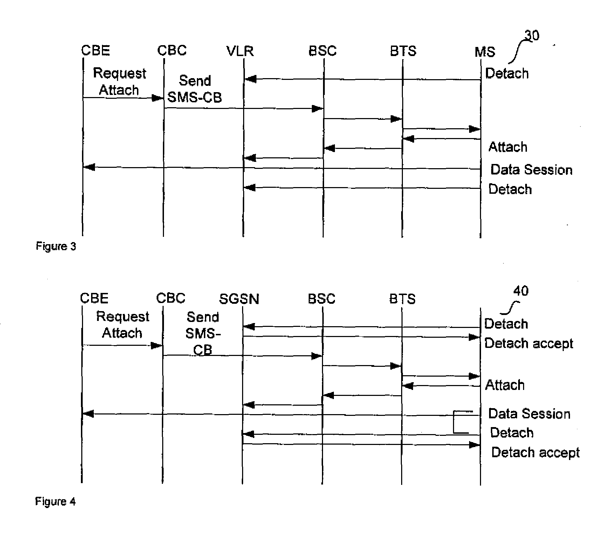

Referring to Figs. 3 and 4, the device 11 issues an IMSI detach message 30 or 40, but instead of powering off, the device 11 continues to monitor the radio cell (MSC 14) to which it was attached. As far as the network (VLR) is concerned the device is detached from the network, but the device 11 will still be able to decode the SMS-Cell Broadcast channel (SMS-CB). As the device can still be paged using this channel, this will be referred to as 'paging mode'. It should be noted that, as all GSM networks have an SMS-CB channel then this signalling capacity is effectively available for free. SMS-CB is defined in 3GPP 023.41.

Preferably this detach is also accompanied by a flush of the subscriber from the MSC/VLR or SGSN. The reason for this is that there is a persistence of subscriber data in the network. If a subscriber is idle for more than a certain amount of time it will be automatically flushed from the network, but relying on this does not give the optimal efficiency in minimising active subscribers. If the HLR were set to flush the subscriber on completion of a transaction then this would have the same net effect.

It should be noted that paging mode 22 is very similar to the operation of a device in idle mode, except that the periodic location update timer is not running and the network is not expecting an update. Bearing this in mind it is possible to conceive an operating mode whereby the device does not issue a detach, but starts monitoring the cell broadcast channel and does not send any period location update messages.

Once a device 11 is detached it will only monitor the SMS-CB channel. The network is able to page the device using a correctly coded message on that channel. The message contains a number of fields, which can include, but is not limited to: Device reference; Action to be performed; Timing of action.

As each SMS-CB message is 93 characters long, it is possible to signal multiple devices with each message, improving efficiency. If the ICCID of the SIM were to be used as the device reference, that would give 3 characters for the instructions. Using other unique identifiers for the device would increase the number of commands that could be sent in a single message. Devices will also be able to be grouped, and a groupID will be used. For example, all the lights in one street would be in a group and would be switched on or off with a single message.

The CBE performs a number of key functions including but not limited to:
- Pairing of devices with the unit under control.
- Receiving instructions to be passed on to the devices or units under control
- Grouping of devices
- Performing heartbeat style healthchecks on devices
- scheduling attach of devices onto the network to minimise resource usage.
- Producing reports

In a perfect case, with carefully controlled scheduling and an attach to detach time of less than one minute 1440 different devices could use timeshare in a single location in the MSC/VLR. The figure is lower for an SGSN as there is a 40 second timer on detach of a PDP context. Even if the traffic was limited to off peak times and the total transaction time is greater than one minute, there is still at least a 200 fold increase in the number of devices that could be addressed without increasing capacity on the network.

On first connection to the network the device will connect and will be in pairing mode. The installation team will pair the device with the system being monitored and then the service is ready for operation.

It is assumed that as part of the pairing operation the Cell Identity (CellID) will be transmitted.

If contact from the cell were to be lost (for example as a result of a Base Station restart) then the device will switch to network acquisition mode, reacquire the network, connect and update on cell location. The network can chose to accept this new connection, or reject it.

The CBE has a database of the locations of the devices. An initial application of this technology is in the control of street lighting. In this application the GSM device is embedded in either the photocell controller, or in the case of newer lighting systems, the electronic ballast.

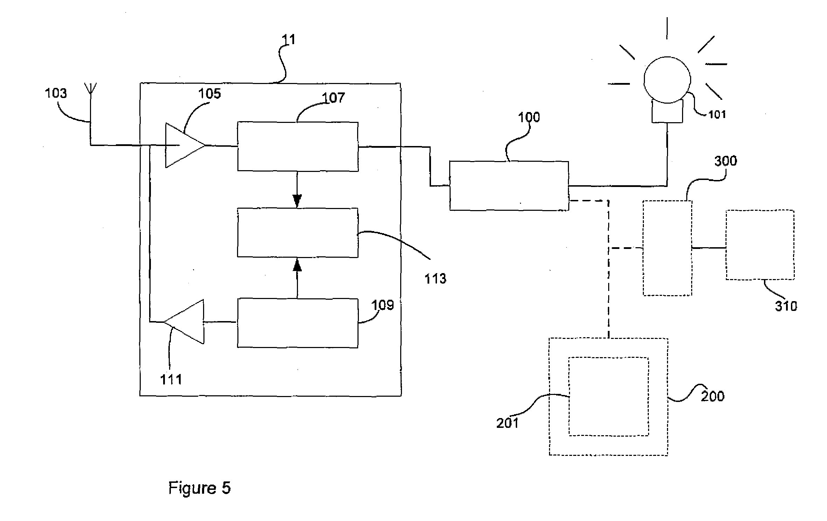

An example is shown in Fig. 5, which has a wireless device 11 connected to a controller 100 that controls a lamp 101. The wireless device 11 has an antenna 103, receive circuitry 105, a decoder 107, an encoder 109, transmit amplifier 111 and a processor 113. In operation, the processor 113 proceeds from mode 20 in Fig. 2 to mode 21, in which ode it causes IMSI detach message 30 or 40 to be encoded by encoder 109 and transmitted by transmit amplifier 111. The processor 113 proceeds to mode 21 and awaits an incoming broadcase message. Incoming messages are received in receive circuitry 105, and decode in decoder 107. If a message is received specifically addressed to the wireless device 11, this is passed to the controller 100 and the lamp 101 is controlled.

The following key states are possible.

States with device detached from the network
- lights off
- lights on
- lights dimmed

States with device attached to the network on receipt of CB message
- Report on messages received from network
- Report on total hours light was on
- Report on energy used
- Report on lamp or ballast health
- Download new firmware
- Download of additional grouping codes

States with device attached to network autonomously
- Detection of failure of light.
- Detection of failure of power

The street light can record power usage or fault information and return this on receipt of a message in paging mode, after reattaching in the network.

When the device is paired with the lighting column then as well as a geographic reference there will be a reference to the column number and one or more groups assigned. The grouping is important as it reduces the scheduling problem. Street lighting by definition is on roads.

In place of lamp 101, there may be a meter 200 having a display 201 for displaying metered units (e.g. units of time, water, gas or electricity). The wireless device 11 receives messages on a short message service cell broadcast channel while not active in either a circuit switched attach or packet switched attach mode. The processor 100 causes the display to display metered units dependent on the messages received.

The messages received in paging mode can also cause the unit to change the tariff. They can additionally or alternatively cause the unit to switch outputs (for example switch from a first type of energy consuming device to a second type - e.g. switch from a convection heater to a storage heater during off-peak low-tariff periods).

In place of meter 200, there may be a set-top box 300 for receiving television signals for display on a television 310. In this case, the processor 100 controls what programs/content is delivered to the television 310, for display on the television, dependent on messages received by the wireless device 11 while not attached in the network. The set-top receives a page then attaches. As with the other applications described herein, the box can automatically attach in cases such as first power on, or loss of network coverage or external stimulus.

One of the abilities of the set top box is also to be able to control the behaviour of the box on receipt of messages, for example by limiting access to channels for non-payment of license.

Although the wireless device is particularly suited for use with units where mobility is not required (such as street lights and smart meters) there are wider applications. For example, in the freight industry a significant percentage of assets may be not moving on a particular day. In this case there can be a hybrid mode where, as long as the asset stays within a particular radio cell it will remain detached from the network and will not attach unless commanded to or it moves outside that radio coverage.

This application could be seen to be particularly effective for tracking rail freight where rolling stock is often stationary in sidings for long periods. As the cell broadcast monitoring is very power efficient this would extend the working battery life.

## Claims

1. A wireless device having:
means for monitoring a short message service cell broadcast channel on a network whilst not being active in either a circuit switched attach or packet switched attach mode.

2. A device in accordance with claim 1, having means for sending or receiving a detach message, wherein the means for monitoring are arranged to monitor the short message service cell broadcast channel without reattaching in the network.

3. A device in accordance with claim 1 or 2 comprising means for receiving and decoding instructions given in the SMS-Cell broadcast message after having detached from the network.

4. A device in accordance with any one of claims 1 to 3 which is capable of attaching to the network on receipt of a specific SMS-Cell Broadcast message

5. A device in accordance with any one of the preceding claims, having means for sending a message to initiate attachment to the network on receipt by the device of an external stimulus.

6. A streetlamp having a wireless device in accordance with any one of claims 1 to 5 and a controller for controlling the lamp in accordance with messages received on a short message service cell broadcast channel while the wireless device is not active in either a circuit switched attach or packet switched attach mode.

7. A streetlamp in accordance with claim 6, further having means for recording power usage information and/or fault information and returning the information on receipt of a message received on the short message service cell broadcast channel.

8. A meter comprising:
a display for displaying metered units, and
a wireless device in accordance with any one of claims 1 to 5 for receiving messages on a short message service cell broadcast channel while the wireless device is not active in either a circuit switched attach or packet switched attach mode, and
a processor for causing the display to display metered units dependent on the messages received.

9. A meter in accordance with claim 8, further having means for receiving and storing tariff information over the short message service cell broadcast channel, and adjusting displayed information for metered units in accordance with the tariff.

10. A television set-top box comprising:
a receiver for receiving television signals for display on a television,
a wireless device in accordance with any one of claims 1 to 5 for receiving messages on a short message service cell broadcast channel while the wireless device is not active in either a circuit switched attach or packet switched attach mode, and
a processor for controlling the display of signals on the television dependent on the messages received.

11. A wireless system comprising a wireless device in accordance with any one of the preceding claims and a network for communication therewith, the network having a controller for scheduling transmission of SMS-CB messages to the wireless device.

12. A wireless system in accordance with claim 11, wherein the controller stores information identifying cell locations of wireless devices monitoring the short message service cell broadcast channel whilst not being active in a circuit switched attach or packet switched attach mode.

13. A wireless system in accordance with claim 11 or 12, wherein the controller comprises means for causing messages for several devices to be broadcast in one broadcast message.

14. A method of operation of a wireless device, comprising monitoring a short message service cell broadcast channel on a network whilst not being active in either a circuit switched attach or packet switched attach mode.

15. A method in accordance with claim 14, comprising performing a flush from a MSC/VLR or SGSN of a subscriber identifier for the wireless device, wherein the flush is performed automatically when a detach message is received from the wireless device or on completion of a transaction.
